# EUROPÄISCHE PATENTSCHRIFT

(11) **EP 0 433 534 B1**
(45) Veröffentlichungstag und Bekanntmachung des Hinweises auf die Patenterteilung: **18.11.1993**
(21) Anmeldenummer: 90106224.0
(22) Anmeldetag: 31.03.1990
(51) Int. Cl.: B23Q 11/08

(54) **Faltenbalg**
Bellows
Soufflet plié

(30) Priorität: 18.12.1989 DE 8914836 U
(43) Veröffentlichungstag der Anmeldung: 26.06.1991
(73) Patentinhaber: Arno Arnold GmbH, D-63179 Obertshausen (DE)
(72) Erfinder: Mang, Wolf M., D-6053 Obertshausen (DE)
(74) Vertreter: Missling, Arne, Dipl.-Ing.

(56) Entgegenhaltungen:
- CH-A- 541 387
- DE-A- 2 227 971
- DE-A- 3 343 471
- DE-A- 3 735 452
- DE-C- 830 445
- DE-C- 3 831 884

## Beschreibung

Die Erfindung bezieht sich auf einen Faltenbalg für die Abdeckung von Führungsbahnen, insbesondere von Führungsbahnen von Werkzeugmaschinen, mit mehreren im wesentlichen U-förmigen Führungsrahmen, an denen eine ziehharmonikaförmige, zusammenfaltbare Abdeckung befestigt ist, wobei an dem nach innen weisenden Rand zumindest eines Führungsrahmens zumindest ein Führungselement befestigt ist.

Faltenbalge der beschriebenen Art, wie sie aus der DE-A-830 445 bekannt sind, werden für die vielfältigsten Anwendungszwecke vorgesehen, beispielsweise in Verbindung mit Schlitten von Werkzeugmaschinen, deren Führungsbahnen gegen Schmutz, Späne oder Kühlflüssigkeiten abgedeckt und geschützt werden sollen. Faltenbalge werden weiterhin bei einer Vielzahl von teleskopartig verlängerbaren Bauelementen eingesetzt, um zu verhindern, daß zwischen die einzelnen Teleskopelemente Schmutzpartikel oder ähnliches eindringt. Weiterhin dienen die Faltenbalge beispielsweise dazu, Schmiermittel, Filme oder Ölfilme auf Führungsbahnen vor Zerstörung oder Verschmutzung zu sichern.

Aus der Vielzahl der möglichen Anwendungsfälle für derartige Faltenbalge ergibt sich, daß auch unterschiedlichste konstruktive Vorgaben erfüllt werden müssen. So ist es insbesondere nötig, den im wesentlichen U-förmigen Führungsrahmen exakt an die Geometrie des jeweiligen durch den Faltenbalg abzudeckenden Bauelements anzupassen. Daraus folgt, daß die Herstellung insbesondere der Führungsrahmen einen erheblichen Aufwand erfordert, da ein exaktes Ausstanzen oder Zuschneiden des Führungsrahmens notwendig ist. Die aus dem Stand der Technik bekannten Faltenbalge sind somit aufwendig und teuer in der Herstellung. Abgesehen von dem Herstellungsaufwand zur Fertigung einer an das jeweilige Maschinenelement angepaßten Führungsrahmen ist es bei den bekannten Faltenbalgen weiterhin nötig, die ziehharmonikaförmige Abdeckung ebenfalls an die Größe der Führungsrahmen anzupassen. Da die Abdeckung üblicherweise fest mit dem Führungsrahmen verbunden ist, beispielsweise durch Nähen oder durch Kleben oder Schweißen, sind jeweils erhebliche maschinentechnische Änderungen erforderlich, um den jeweiligen Verbindungsvorgang zwischen dem Führungsrahmen und der Abdeckung an die jeweils geänderte Geometrie anzupassen.

Der Erfindung liegt die Aufgabe zugrunde, einen Faltenbalg der genannten Art zu schaffen, welcher bei einfachem Aufbau und betriebssicherer Handhabbarkeit in einfacher Weise an unterschiedliche Dimensionierungen von abzudeckenden Führungsbahnen oder ähnlichem angepaßt werden kann.

Diese Aufgabe wird mit den Merkmalen des Anspruches 1 gelöst.

Der erfindungsgemäße Faltenbalg zeichnet sich durch eine Reihe erheblicher Vorteile aus. Da an dem nach innen weisenden Rand des Führungsrahmens das Führungselement angebracht ist, ist es möglich, die Geometrie des Führungsrahmens auf besonders einfache Weise an die jeweiligen Anforderungen anzupassen. Da bei einem Faltenbalg der Führungsrahmen in Kontakt mit dem abzudeckenden Bauelement, beispielsweise der Führungsbahn sein muß, um einen exakten Lauf und eine Abstützung und Halterung des Faltenbalges sicherzustellen, kann diese Führungseigenschaft durch das zusätzlich vorgesehene Führungselement übernommen werden. Es ist damit möglich, den Faltenbalg bzw. den Führungsrahmen in einer Standardgröße auszuführen und eine Anpassung dadurch vorzunehmen, daß der Freiraum in dem U-förmigen Profil des Führungsrahmens durch eine entsprechende Anzahl von Führungselementen verkleinert wird. Es kann somit ein relativ großer Führungsrahmen auf einfache Weise an eine kleinere Führungsbahn angepaßt werden, ohne daß hierfür zusätzliche Arbeiten an dem Führungsrahmen selbst erforderlich werden. Weiterhin kann die Abdeckung in der standardmäßigen Größe verbleiben, es ist nicht erforderlich, für jede Dimensionierung des Führungsrahmens eine entsprechend vergrößerte oder verkleinerte Abdeckung vorzusehen. Dadurch ergeben sich erheblich vereinfachte Herstellungsverhältnisse, welche sich auch in einem verbesserten Kostenverhältnis widerspiegeln.

Erfindungsgemäß kann das Führungselement an dem zentrischen Bereich des U-förmigen Führungsrahmens befestigt sein, es ist jedoch auch möglich, das Führungselement alternativ dazu oder zusätzlich an einem Schenkel des U-förmigen Führungsrahmens anzuordnen. Der erfindungsgemäße Faltenbalg schafft somit die Möglichkeit, eine beliebige Anzahl beliebig geformter Führungselemente an dem nach innen weisenden Rand des Führungsrahmens anzubringen, so daß es insbesondere möglich ist, zumindest eines der Führungselemente so zu gestalten, daß dieses seitlich zumindest einen Teil der Führungsbahn umgreift. Es ist jedoch auch in günstiger Weise möglich, das Führungselement so zu dimensionieren, daß ein formschlüssiger Eingriff in eine Nut einer Führungsbahn gewährleistet ist. Die Nut kann beispielsweise in Form einer Schwalbenschwanzführung oder einer V-förmigen Nut ausgestaltet sein und sicherstellen, daß der Faltenbalg nicht nur durch sein Eigengewicht auf der Führungsbahn aufliegt, sondern formschlüssig gehalten wird. Die Erfindung schafft somit die Möglichkeit, unter Verwendung eines im wesentlichen U-förmigen Führungsrahmens einen Faltenbalg zu schaffen, welcher beispielsweise auch in einer um 90° oder mehr verdrehten Stellung gehaltert werden kann. Es ist sogar möglich, den Faltenbalg hängend an der Unterseite eines Bauelementes zu montieren, ohne daß hierfür von der standardmäßigen U-förmigen Form des Führungsrahmens abgewichen werden müßte.

In einer besonders günstigen Ausgestaltung der Erfindung ist vorgesehen, daß der Führungsrahmen mit einer Standardbreite ausgebildet ist. Weiterhin ist es besonders günstig, wenn die Schenkel des Führungsrahmens eine maximale Länge aufweisen und verkürzbar sind. Eine Breitenanpassung des Führungsrahmens bzw. des Faltenbalges kann somit dadurch erfolgen, daß entsprechende Führungselemente an den Schenkeln des Führungsrahmens befestigt werden. Eine Anpassung der Höhe des Führungsrahmens kann entweder dadurch geschehen, daß an dem zentrischen Teil des U-förmigen Profils des Führungsrahmens ein Führungselement befestigt wird, es ist jedoch auch möglich, die Schenkel in ihrer Länge, beispielsweise durch einfaches Abschneiden zu kürzen. Auch hierbei ist keine Anpassung der Herstellungseinrichtungen des Rahmens bzw. der Abdeckung erforderlich, da diese in einfachster Weise mit abgetrennt werden können.

Die Erfindung schafft weiterhin die Möglichkeit, das Führungselement aus einem anderen Material als dem Führungsrahmen auszubilden. So ist es beispielsweise möglich, den Führungsrahmen aus einem relativ leichten, jedoch nicht sehr verschleißfesten Kunststoff herzustellen, während die Führungselemente aus einem hochverschleißfesten Material gefertigt sind. Dabei ist es insbesondere möglich, Materialpaarungen zwischen dem Führungselement und dem abzudeckenden Bauteil zu schaffen, welche besonders günstige Gleiteigenschaften aufweisen.

Weiterhin kann erfindungsgemäß das Führungselement mit einer vergrößerten Gleitfläche versehen sein, so daß auch hierdurch die Gleiteigenschaften und damit die Bewegungsfähigkeit des Faltenbalges verbessert werden.

Da das oder die erfindungsgemäß vorgesehenen Führungselemente sowohl dazu dienen, eine Dimensionsanpassung des Führungsrahmens vorzunehmen, als auch bessere Gleiteigenschaften hervorzurufen und/oder eine formschlüssige Verbindung zwischen dem Faltenbalg und dem Werkzeug zu erzeugen, ist es erfindungsgemäß nicht erforderlich, an jedem der Führungsrahmen entsprechende Führungselemente zu befestigen. Es ist vielmehr ausreichend, an einigen der Führungsrahmen entsprechende Halterung oder Abstützung vorzusehen, während die restlichen Führungsrahmen dann nur dazu dienen, die Abdeckung des Faltenbalges zu stützen.

Das Führungselement ist bevorzugterweise an dem Führungsrahmen fest, d.h., nicht lösbar befestigt, wobei die nicht lösbare Verbindung dadurch erfolgen kann, daß das Führungselement verschweißt, verklebt oder vernietet ist.

Um die Anbringung der Führungselemente an den Führungsrahmen zu erleichtern und um sicherzustellen, daß diese auch bei längerem Betrieb nicht gelöst werden können, kann es sich als günstig erweisen, den Führungsrahmen und das Führungselement jeweils plattenförmig auszubilden und jeweils einen Randbereich mit einer Ausnehmung zur Einführung des anderen Randbereichs zu versehen. Es findet somit zusätzlich zu dem Verschweißen, Verkleben oder Vernieten eine zumindest teilweise formschlüssige Verbindung statt. Beispielsweise kann das Führungselement mit einer Randnut versehen sein, welche einen im wesentlichen U-förmigen Querschnitt aufweist, so daß das Führungselement auf den Führungsrahmen aufsteckbar ist. Es ist jedoch auch möglich, an dem Führungsrahmen an einer Seite des Randbereichs eine stufenförmige Ausnehmung auszubilden. In allen Fällen ist sichergestellt, daß das Führungselement exakt zu dem Führungsrahmen ausgerichtet ist, so daß während des Klebe-, oder Verbindungsvorganges keine Verschiebung oder ähnliches auftreten kann. Alternativ dazu kann es auch günstig sein, den Führungsrahmen und das Führungselement mittels eines einen im wesentlichen H-förmigen Querschnitt aufweisenden Verbindungselementes zu verbinden.

Im folgenden wird die Erfindung anhand von Ausführungsbeispielen in Verbindung mit der Zeichnung beschrieben. Dabei zeigt:
- Figur 1: eine schematische Seitenansicht eines ersten Ausführungsbeispiels des erfindungsgemäßen Faltenbalgs,
- Figur 2: eine Unteransicht auf den Faltenbalg unter Weglassung der erfindungsgemäßen Führungselemente,
- Figur 3: eine schematische Seitenansicht eines Ausführungsbeispiels des Führungselements,
- Figur 4: eine Unteransicht des in Figur 3 gezeigten Ausführungsbeispiels des Führungselements,
- Figur 5: eine schematische Schnittansicht durch den erfindungsgemäßen Faltenbalg,
- Figur 6: bis
- Figur 9: Teil-Schnittansichten des Verbindungsbereichs zwischen dem Führungsrahmen und dem Führungselement.

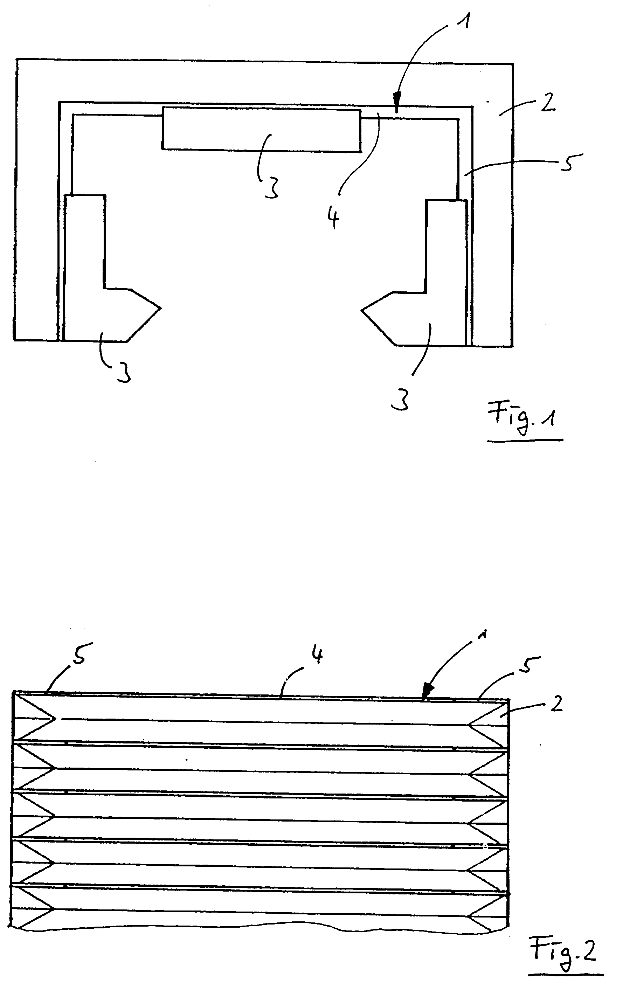

In Figur 1 ist eine Seitenansicht eines erfindungsgemäßen Ausführungsbeispiels des Faltenbalgs dargestellt. Dieser umfaßt einen Führungsrahmen 1, welcher einen im wesentlichen U-förmigen Querschnitt aufweist und insbesondere einen zentrischen Bereich 4 und zwei seitliche Schenkel 5 umfaßt. An dem Führungsrahmen 1 ist eine ziehharmonikaartig zusammenschiebbare Abdeckung 2 angebracht, sowie dies bei Faltenbälgen üblich ist. Die in Figur 2 gezeigte Unteransicht verdeutlicht die ziehharmonikaartige Gestalt der Abdeckung 2.

Am Randbereich des U-förmigen Führungsrahmens 1 sind bei dem in Figur 1 gezeigten Ausführungsbeispiel drei Führungselemente 3 befestigt, nämlich ein im wesentlichen rechteckförmiges zentrisches Führungselement an dem zentrischen Bereich 4, sowie zwei seitliche Führungselemente 3, welche an den beiden Schenkeln 5 angebracht sind. Die beiden seitlichen Führungselemente weisen jeweils einen V-förmigen Rand oder Endbereich auf, welcher in eine entsprechende Nut oder Ausnehmung eines Maschinenelementes einbringbar ist.

Die Figur 2 verdeutlicht in der Unteransicht nochmals die Ausgestaltung des Faltenbalges, wobei auf die Darstellung der in Figur 1 gezeigten Führungselemente 3 verzichtet wurde.

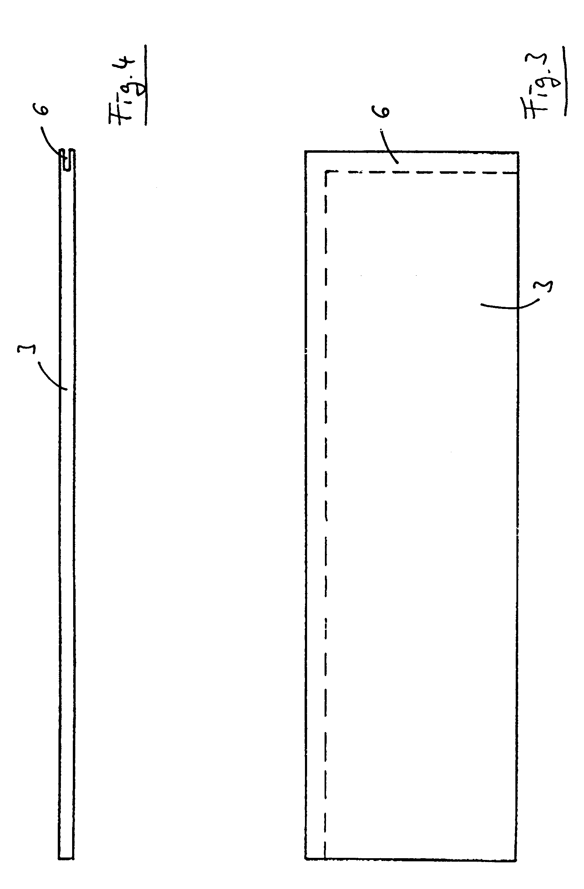

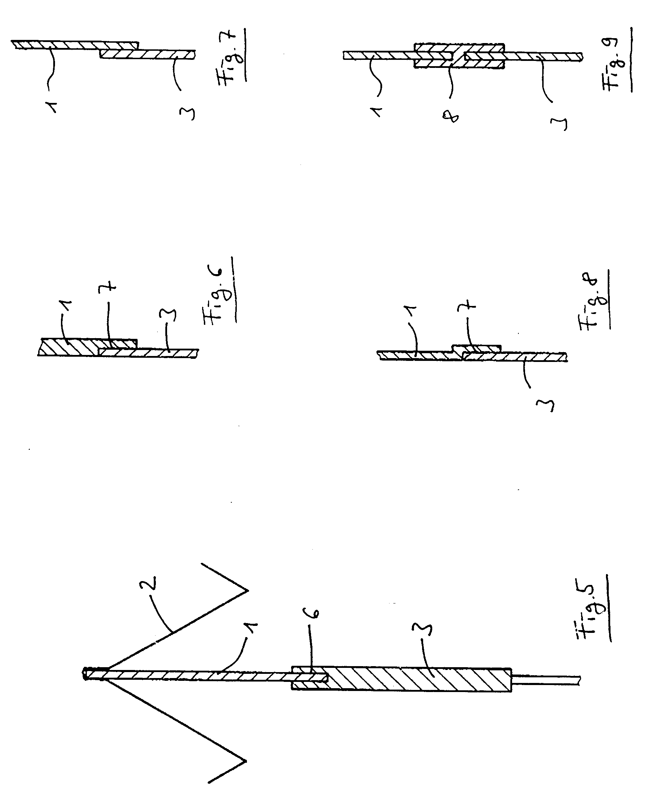

Die Figuren 3, 4 und 5 zeigen jeweils ein erfindungsgemäßes Ausführungsbeispiel des Führungselementes 3. An dem Außenumfang des Führungselements 3 ist eine Randnut 6 ausgebildet, welche einen im wesentlichen U-förmigen Querschnitt aufweist und so dimensioniert ist, daß der plattenförmige Führungsrahmen 1 bzw. dessen Randbereich, wie in Figur 5 gezeigt, in die Randnut 6 eingeschoben werden kann. Es ist somit möglich, das Führungselement 3 zusätzlich zu der nachfolgenden festen Verbindung formschlüssig vorzufixieren. Nachfolgend kann das Führungselement mit dem Führungsrahmen 1 beispielsweise verschweißt, vernietet oder verklebt werden. Das Ausführungsbeispiel gemäß Figur 3 zeigt, daß das Führungselement 3 an mehreren Seiten mit der Randnut 6 versehen sein kann, so daß es auch in den Eckenbereich des U-förmigen Führungsrahmens 1 eingebracht werden kann.

Die Figuren 7 bis 9 zeigen jeweils unterschiedliche Ausführungsbeispiele des Übergangsbereichs zwischen dem Führungsrahmen 1 und dem Führungselement 3. In Figur 6 ist der plattenförmige Führungsrahmen 1 mit einer größeren Decke ausgebildet, als das plattenförmige Führungselement 3, so daß am Randbereich des Führungsrahmens 1 eine stufenartige Ausnehmung 7 ausgebildet ist, in welche das Führungselement 3 einlegbar ist. In ähnlicher Weise ist das in Figur 8 gezeigte Ausführungsbeispiel ausgestaltet, wobei die Ausnehmung 7 in Form einer Stufe des Führungsrahmens 1 ausgestaltet ist. Gemäß dem in Figur 7 gezeigten Ausführungsbeispiel werden der Führungsrahmen 1 und das Führungselement 3 stumpf miteinander verbunden.

Die Figur 9 zeigt eine weitere Möglichkeit, den Führungsrahmen 1 mit dem Führungselement 3 zu verbinden. Hierbei wird ein Verbindungselement 8 verwendet, welches einen im wesentlichen H-förmigen Querschnitt aufweist, so daß sowohl der plattenförmige Führungsrahmen 1 als auch das plattenförmige Führungselement 3 in die jeweilige Nut des Verbindungselements 8 einbringbar ist. In allen Fällen ist sichergestellt, daß eine exakte Ausrichtung des Führungselements 3 zu dem Führungsrahmen 1 erfolgt.

Die Erfindung schafft somit die Möglichkeit, Standardrahmen bzw. Standardfaltenbälge herzustellen, welche durch Einsetzen der Führungselemente in einfachster Weise an die jeweiligen Dimensionsanforderungen angepaßt werden können. In allen Fällen wird die maximal mögliche Schenkelbreite des Führungsrahmens verwendet, wobei die Länge der vertikalen Schenkel 5 durch einfaches Abschneiden von einer Maximallänge gekürzt werden kann.

## Patentansprüche

1. Faltenbalg für die Abdeckung von Führungsbahnen, insbesondere von Führungsbahnen von Werkzeugmaschinen, mit mehreren im wesentlichen U-förmigen Führungsrahmen (1), an denen eine ziehharmonikaförmige, zusammenfaltbare Abdeckung (2) befestigt ist, wobei an dem nach innen weisenden Rand zumindest eines Führungsrahmens (1) zumindest ein Führungselement (3) befestigt ist, dadurch gekennzeichnet, daß der Führungsrahmen (1) mit einer Standardbreite ausgebildet ist und daß der Führungsrahmen (1) zur Anpassung an unterschiedliche Abstände zwischen dem Führungsrahmen (1) des Faltenbalges und der Führungsbahn der Werkzeugmaschine am Führungsrahmen (1) angebrachte, dem genannten Abstand angepaßt dimensionierte Führungselemente (3) aufweist.

2. Faltenbalg nach Anspruch 1, dadurch gekennzeichnet, daß das Führungselement (3) an dem zentrischen Bereich (4) an dem bzw. den Schenkein (5) des U-förmigen Führungsrahmens (1) befestigbar ist.

3. Faltenbalg nach Anspruch 1 oder 2, dadurch gekennzeichnet, daß die Schenkel des Führungsrahmens eine maximale Länge aufweisen und verkürzbar sind.

4. Faltenbalg nach einem der Ansprüche 2 oder 3, dadurch gekennzeichnet, daß das Führungselement (2) zum seitlichen Umgreifen eines Teil einer Führungsbahn ausgebildet ist.

5. Faltenbalg nach einem der Ansprüche 1 bis 4, dadurch gekennzeichnet, daß das Führungselement (3) zum formschlüssigen Eingriff mit einer Nut einer Führungsbahn strukturiert ausgebildet ist.

6. Faltenbalg nach einem der Ansprüche 1 bis 5, dadurch gekennzeichnet, daß das Führungselement (3) aus einem anderen Material als der Führungsrahmen (1) besteht.

7. Faltenbalg nach einem der Ansprüche 1 bis 6, dadurch gekennzeichnet, daß das Führungselement (3) mit einer vergrößerten Leitfläche versehen ist.

8. Faltenbalg nach einem der Ansprüche 1 bis 7, dadurch gekennzeichnet, daß Führungselemente (3) nur an einigen der Führungsrahmen (1) des Faltenbalges angeordnet sind.

9. Faltenbalg nach einem der Ansprüche 1 bis 8, dadurch gekennzeichnet, daß das Führungselement (3) an dem Führungsrahmen (1) nicht lösbar befestigt ist.

10. Faltenbalg nach Anspruch 9, dadurch gekennzeichnet, daß die nicht lösbare Verbindung durch Schweißen, Kleben oder Nieten gebildet ist.

11. Faltenbalg nach einem der Ansprüche 1 bis 10, dadurch gekennzeichnet, daß der Führungsrahmen (1) und das Führungselement (3) jeweils plattenförmig ausgebildet sind und jeweils ein Randbereich mit einer Ausnehmung zur Einführung des anderen Randbereichs versehen ist.

12. Faltenbalg nach Anspruch 11, dadurch gekennzeichnet, daß das Führungselement (3) mit einem einen U-förmigen Querschnitt bildenden Randnut (6) versehen ist.

13. Faltenbalg nach Anspruch 11, dadurch gekennzeichnet, daß der Führungsrahmen (1) an einer Seite des Randbereiches mit einer stufenförmigen Ausnehmung (7) ausgebildet ist.

14. Faltenbalg nach einem der Ansprüche 1 bis 10, dadurch gekennzeichnet, daß der Führungsrahmen (1) und das Führungselement (3) mittels eines einen im wesentlichen H-förmigen Querschnitt aufweisenden Verbindungselementes (8) verbunden sind.

## Claims

1. Bellows for covering guideways, in particular guideways of machine tools, comprising a plurality of substantially U-shaped guide frames (1) to which a concertina-type, collapsible covering (2) is secured, wherein at least one guide element (3) is secured to the inward facing edge of at least one guide frame (1) characterised in that the guide frame (1) is of a standard breadth and in that for the purpose of adapting to different distances between the guide frame (1) of the bellows and the guideway of the machine tool, the guide frame (1) has guide elements (3) mounted thereon and dimensioned according to the said distance.

2. Bellows according to claim 1, characterised in that the guide element (3) can be secured to the central region (4) of the arm or arms (5) of the U-shaped guide frame (1).

3. Bellows according to claim 1 or 2, characterised in that the arms of the guide frame have a maximum length and can be shortened.

4. Bellows according to either one of claims 2 and 3, characterised in that the guide element (2) is designed to engage laterally round part of a guideway.

5. Bellows according to any one of claims 1 to 4, characterised in that the guide element (3) is constructed so as to engage positively with a groove of a guideway.

6. Bellows according to any one of claims 1 to 5, characterised in that the guide element (3) consists of a different material from the guide frame (1).

7. Bellows according to any one of claims 1 to 6, characterised in that the guide element (3) is provided with an enlarged guiding surface.

8. Bellows according to any one of claims 1 to 7, characterised in that guide elements (3) are arranged on only some of the guide frames (1) of the bellows.

9. Bellows according to any one of claims 1 to 8, characterised in that the guide element (3) is non-detachably fixed to the guide frame (1).

10. Bellows according to claim 9, characterised in that the non-detachable connection is formed by welding, adhesion or riveting.

11. Bellows according to any one of claims 1 to 10, characterised in that the guide frame (1) and the guide element (3) are each formed so as to be plate-shaped and in each case an edge region with a recess for insertion of the other edge region is provided.

12. Bellows according to claim 11, characterised in that the guide element (3) is provided with an edge groove (6) forming a U-shaped cross-section.

13. Bellows according to claim 11, characterised in that the guide frame (1) is formed with a step-type recess (7) on one side of the edge region.

14. Bellows according to any one of claims 1 to 10, characterised in that the guide frame (1) and the guide element (3) are connected by means of a connecting element (8) having a substantially H-shaped cross-section.

## Revendications

1. Soufflet à plis pour couvrir des chemins de guidage, en particulier des chemins de guidage de machines-outils, comportant plusieurs cadres de guidage (1) essentiellement en forme de U, sur lesquels est fixé un revêtement (2) en forme d'accordéon, se repliant en soufflet, tandis qu'au moins un organe de guidage (3) est fixé au bord, tourné vers l'intérieur, d'au moins un cadre de guidage (1), caractérisé en ce que le cadre de guidage (1) est réalisé avec une largeur standard et présente des organes de guidage (3) rapportés sur ce cadre de guidage (1) pour s'adapter à des distances différentes entre le cadre de guidage (1) du soufflet à plis et le chemin de guidage de la machine-outil, organes qui sont dimensionnés pour s'adapter aux dites distances.

2. Soufflet à plis suivant la revendication 1, caractérisé en ce que l'organe de guidage (3) peut être fixé, dans la zone centrale (4), sur la ou les branches (5) du cadre de guidage (1) en forme de U.

3. Soufflet à plis suivant la revendication 1 ou la revendication 2, caractérisé en ce que les branches du cadre de guidage présentent une longueur maximale et peuvent être raccourcies.

4. Soufflet à plis suivant l'une des revendications 2 ou 3, caractérisé en ce que l'organe de guidage (3) est réalisé pour venir latéralement en prise avec une partie du chemin de guidage en entourant celle-ci.

5. Soufflet à plis suivant l'une quelconque des revendications 1 à 4, caractérisé en ce que l'organe de guidage (3) est conformé pour un engagement géométrique avec une rainure d'un chemin de guidage.

6. Soufflet à plis suivant l'une quelconque des revendications 1 à 5, caractérisé en ce que l'organe de guidage (3) est constitué d'un autre matériau que le cadre de guidage (1).

7. Soufflet à plis suivant l'une quelconque des revendications 1 à 6, caractérisé en ce que l'organe de guidage (3) est muni d'une surface de guidage agrandie.

8. Soufflet à plis suivant l'une quelconque des revendications 1 à 7, caractérisé en ce que des organes de guidage (3) sont disposés seulement sur quelques uns des cadres de guidage (1) du soufflet à plis.

9. Soufflet à plis suivant l'une quelconque des revendications 1 à 8, caractérisé en ce que l'organe de guidage (3) est fixé de façon non démontable sur le cadre de guidage (1).

10. Soufflet à plis suivant la revendication 9, caractérisé en ce que la liaison non démontable est réalisée par soudage, collage ou rivetage.

11. Soufflet à plis suivant l'une quelconque des revendications 1 à 10, caractérisé en ce que le cadre de guidage (1) et l'organe de guidage (3) sont chacun réalisés en forme de plaque et en ce que, chaque fois, une zone de bordure est munie d'un évidement pour l'introduction de l'autre zone de bordure.

12. Soufflet à plis suivant la revendication 11, caractérisé en ce que l'organe de guidage (3) est muni d'une rainure de bord (6) qui lui donne une section en U.

13. Soufflet à plis suivant la revendication 11, caractérisé en ce que le cadre de guidage (1) est réalisé, sur un côté de la zone de bordure, avec un évidement (7) présentant un gradin.

14. Soufflet à plis suivant l'une quelconque des revendications 1 à 10, caractérisé en ce que le cadre de guidage (1) et l'organe de guidage (3) sont reliés par un organe de liaison (8) présentant essentiellement une section en forme de H.
